# EUROPEAN PATENT SPECIFICATION

(11) **EP 0 928 412 B1**
(45) Date of publication and mention of the grant of the patent: **15.10.2003**
(21) Application number: 97901037.8
(22) Date of filing: 10.01.1997
(51) Int. Cl.: G01G 17/06, G01G 13/04, B29B 7/76

(54) **METHOD FOR METERING LIQUIDS**
FLÜSSIGKEITSMESSVERFAHREN
PROCEDE DE DOSAGE DE LIQUIDES

(43) Date of publication of application: 14.07.1999
(73) Proprietor: Genera S.R.L., 31100 Treviso (IT)
(72) Inventor: RADDI, Roberto, I-31021 Mogliano Veneto (IT); PICCIONE, Franco, I-31100 Treviso (IT); DETOMI, Roberto, I-35010 Limena (IT)
(74) Representative: Dragotti, Gianfranco
(86) International application number: EP9700165
(87) International publication number: WO98030872

(56) References cited:
- EP-A- 0 283 137
- EP-A- 0 353 197
- EP-A- 0 690 294
- DE-A- 3 807 414
- GB-A- 2 133 775
- GB-A- 2 163 360

## Description

The subject of the present invention is a method for metering, in particular of liquids or fluids even of paste-like consistency.

Also a subject of the present invention is a device for the implementation of the aforesaid method. The subject of the invention, as will be more easily understood from what follows, relates to the field of apparatuses for preparing mixtures, and in particular concerns pneumatic devices for metering paste-like liquids and fluids. That which is the subject of the present invention finds a use in particular, but obviously not exclusively, in pneumatic metering devices for fluid and/or paste-like base colours for producing coloured mixtures or compositions of all hues.

Apparatuses are known for metering paste-like liquids and fluids. In general, such metering apparatuses are provided with volumetric pumps connected to the supply reservoirs for the liquids and to the delivery nozzles; in order to deliver a predetermined quantity of liquid, the associated pump is actuated for a predetermined period of time, depending on the capacity of the pump Examples of such apparatuses are described in e.g. EP-A-0 690 294, EP-A-0 283 137 and EP-A -0 353 197. Such apparatuses have a series of drawbacks and problems which are directly dependent on the metering system used.

If there are air bubbles or thickenings in the liquid, the quantity of liquid delivered is different from that desired, and in fact such air bubbles can alter the physical characteristics of the liquid (such as the weight or the specific volume), causing malfunctions, or the chemical characteristics of the liquid may change. In the case of distribution of liquids which harden on contact with air, these may dry in the pipes of the apparatus. In the case of liquids which are chemically sensitive to air (oxidation or the like) the liquid distributed may prove to be unsuitable for its intended use. Because the delivery nozzles in general consist of short end pipes, in the case of rather paste-like liquids part of the liquid may remain in such nozzles or pipes, so that not only the quantity of liquid delivered varies, but, for example, owing to a long period of inactivity, the paste-like liquid may solidify, leading to malfunctions.

For the most part, it is necessary to meter several liquids into a single container. The distribution apparatuses for this purpose at present consist of a horizontal wheel on which are placed, in a circular arrangement, the reservoirs for the liquids and also the volumetric pumps with the respective nozzles. Beneath the said wheel there is placed, at the perimeter, a support surface for the container into which the various liquids are to be poured. The upper wheel with the reservoirs, pumps and nozzles rotates, from time to time bringing above the collecting container the nozzle relating to the liquid selected. Alternatively, similar apparatuses provide for the upper wheel, with reservoirs, pumps and nozzles, to be fixed and for the support surface for the collecting container to rotate, coming from time to time beneath the nozzles selected.

This type of apparatus requires a great deal of space, depending on the number of liquids to be metered, in particular when this occurs in the same container.

In order to remedy all the above drawbacks, a new type of apparatus has been designed and produced which avoids the phenomenon of thickening in the pipes, and that of clogging of the nozzles, and which delivers the necessary correct amount of liquids even in the presence of air bubbles.

Moreover, the exemplary embodiment considered concerns an apparatus which uses a single head for the delivery of a plurality of liquids, for each of which a device according to the invention is used. Such apparatuses have, in particular, minimum overall dimensions, however, contained within the limits imposed by the dimensions of the containers used at present.

In particular, all the metering nozzles are brought together in the aforesaid single head, with dimensions in plan which are smaller than the mouth of the container in which the liquids are to be received.

With the apparatus produced in accordance with the exemplary embodiment mentioned above and described in detail hereinafter, a solution has been provided in particular, in an advantageous manner, for the problem of compactness thereof, a feature which is certainly of advantage for the user with space problems. It is clear, however, that by the association, in a manner different from that under consideration, of a series of devices according to the invention, the apparatus finds a clearly industrial application even in the absence of the aforesaid problems of space and/or arrangement.

In the example being considered, the apparatus consists of several pumps for continuous circulation of the liquids, of a delivery head for the liquids which is provided with a number of delivery nozzles with pneumatic valves, equal to the number of base liquids to be metered, and of a support surface for the receiving container connected to a precision balance.

Each of the circulating pumps, one for each liquid, keeps the liquid in continuous circulation in the pipes, pushing the liquid from the supply reservoir towards the delivery nozzle, and from the latter, by means of a further recirculating pipe, the undelivered liquid is returned to the supply reservoir.

The nozzles each consist of a vertically sliding rod, the lower end of which slides in a chamber connected to the two pipes, one for the intake of the liquid coming from the pump and one which returns the liquid to the reservoir for that same liquid.

The lower end of the rod opens and closes the aperture from which the liquid is delivered, and at the same time the said rod partially closes and opens an aperture for the recirculating of the liquid to the supply reservoir. In the closed position in particular, the end of the rod protrudes slightly from the delivery aperture, so as to ensure that no liquid remains in the aforesaid aperture, while at the same time the liquid recirculating aperture is opened. In the open position, however, the end of the rod at least partially closes the aperture for the return or recirculating of the liquid to the reservoir while opening the delivery aperture so as to allow the emergence of the liquid itself.

The upper end of the rods is connected to suitable actuating means, preferably pneumatic, which control the vertical displacement of the rod itself.

In order to restrict the lateral dimensions of the head which contains the nozzles, rods, delivery apertures and actuating means, the rods themselves are of different lengths, so that the actuating means, of larger transverse dimensions than the rods, reach different heights and, in particular, alternately two different heights.

The new apparatus has considerable advantages both from the point of view of the accuracy of the liquid dispensed and as regards the overall dimensions of the whole of the nozzles.

When it is necessary to deliver a given quantity of liquid, the relative rod is raised, allowing the liquid to emerge; the balance connected to the support surface for the collecting container measures continuously the increase in weight and, on approaching the desired quantity of liquid, operates the occluding means in order to close the delivery aperture and to reopen it then at short intervals until the desired quantity is obtained.

When air bubbles are present in the liquid, these do not in practice affect the weight of liquid dispensed.

The delivery head for the liquids is very compact and can bring together in a small space, comparable with the mouth of the collecting container, a considerable number of liquid delivery nozzles; however, there are no rotating parts or movements to be carried out in order to align the collecting container and the delivery nozzles.

There is no possibility of the liquids solidifying or stagnating in the pipes in that the pumps, owing to the original configuration of the device according to the invention, are always operating and therefore maintain every liquid in constant, but slow, circulation.

A first subject of the present invention is therefore a method for metering liquid in accordance with appended claim 1.

A further subject of the present invention is a device for metering liquid particularly of a liquid of paste-like consistency in accordance with appended claim 3.

The accompanying figures show, by way of a non-limitative example, an embodiment of the invention for implementation, in compact form and in the case where the liquids are base colours. More precisely, in the aforesaid figures:
Figure 1 is a block diagram illustrating a delivery station for the liquid in the step of delivery of the latter, in an apparatus using a series of devices according to the invention;
Figure 2 is a block diagram analogous to that in Figure ! which shows the delivery station in the step of recirculating of the liquid;
Figure 3 is a diagrammatic view of a delivery and recirculating head according to section III-III in Figure 4 in the said apparatus using a series of devices according to the invention;
Figure 4 illustrates the head from Figure 3 according to section IV-IV of the same Figure.

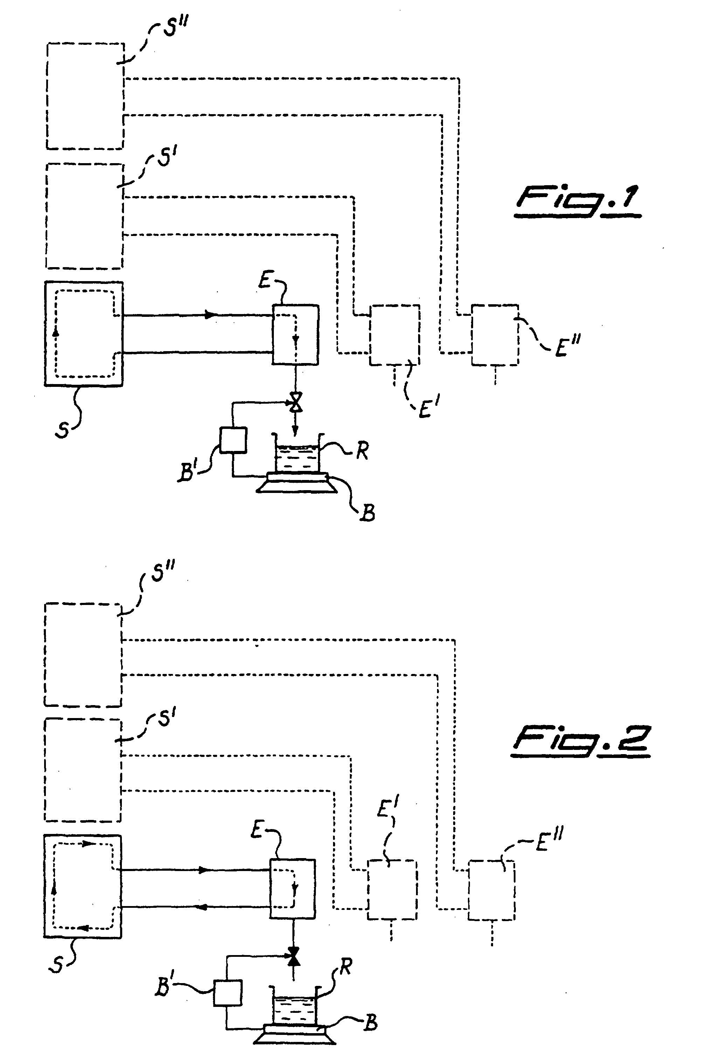

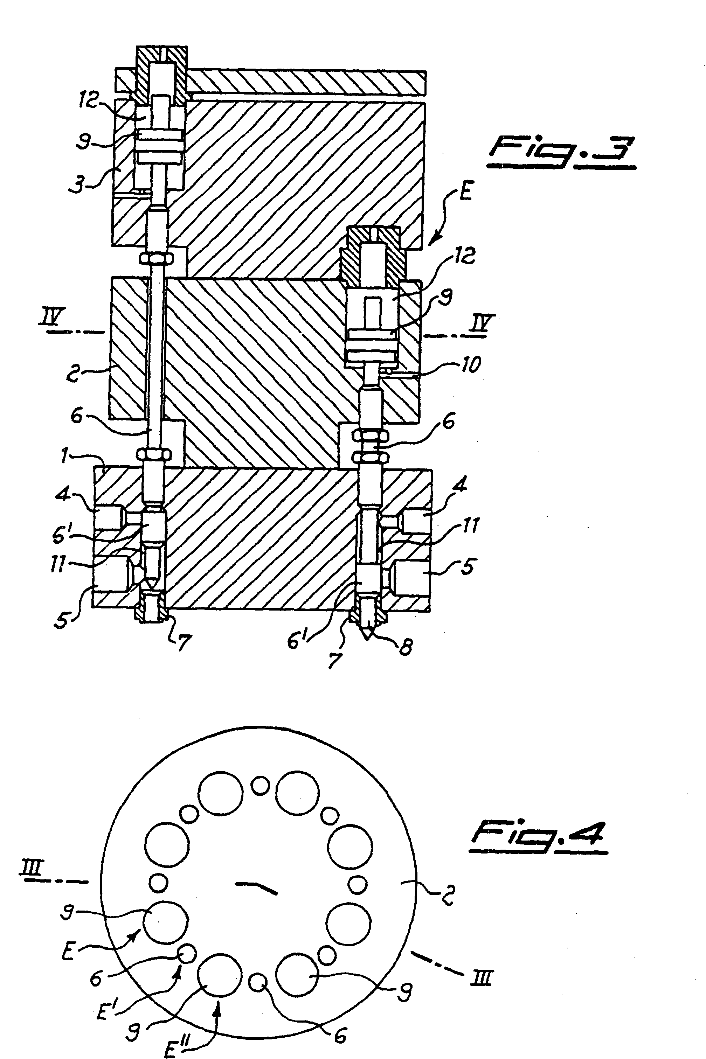

Referring firstly to Figures 3 and 4, a description will now be given, by way of example, of an apparatus for metering liquids, in the compact version as specified above.

The apparatus comprises a delivery head which incorporates a series of devices according to the invention, one of which is indicated in the assembly by E in Figures 1 to 3, while two of the remainder, shown by dashed lines, are designated by the references E' and E" in Figures 1 and 2.

The delivery head consists principally of three superposed frame parts or components 1, 2, 3.

In the lower part 1, connections 5 are provided for the feeding or supply of the liquid and nozzles or connections 4 for the recirculating or return flow of the latter respectively from and towards a supply station indicated by S in Figures 1 and 2, while S' and S" (shown by dashed lines) indicate two of the remaining supply stations. The number of such pairs of connections may, for example (as shown), be sixteen, where a base colour circulates for each pair of connections. Such connections 4, 5 communicate with a recirculating chamber 11 of the station E, in the lower part of which a suitable delivery nozzle or aperture 7 is provided through which the liquid is dispensed.

Inside the recirculating chamber 11 can slide the rod 6 of a pneumatic actuating means, the lower end 8 of which, in the closed position, occludes the liquid delivery aperture 7. In particular, the said rod 6 has an enlarged portion 6' for the opening and closing of the nozzles 4, 5.

In the open position, the rod 6 opens the supply connection 5 and the aperture 7, at the same time closing the recirculating pipe 4 (left-hand piston in Figure 3), while in the closed position it closes the connection 5 and the aperture 7 while it opens the recirculating pipe 4 (right-hand piston in Figure 3).

The two upper parts 2, 3 of the head receive inside them the actuating means for the rods 6; in this example, the actuating means consist of pneumatic pistons 9 that can slide inside suitable cylindrical seats 12 into which or out of which compressed air is conveyed through suitable pipes 10.

In particular, the pneumatic pistons 9 are housed alternately in the intermediate part 2 and in the upper part 3 of the head so as to limit the lateral dimensions of the whole of the liquid metering nozzles.

In the case illustrated, a delivery head is shown with sixteen metering components which are distributed in an area smaller than the aperture of a suitable receiving container indicated by R in Figures 1 and 2. In the exemplary embodiment under consideration, that is to say, in the compact version of the apparatus, the said container R is the only one, as specified above, but it is obvious that others could be provided, particularly for use on an industrial scale, the number depending on the specific requirements and applications.

The solution under consideration has considerable advantages insofar as the constituents to be metered are delivered directly into the receiving container R placed beneath the relative head. According to one of the characteristics of the present invention, the said receiving container R is arranged on a balance, indicated by B in Figures 1 and 2, to measure the quantity by weight of liquid introduced into the said receiving container R.

According to a further characteristic of the invention, the balance B is arranged, in any known manner, to emit a continuous operating signal for reading the quantity by weight of liquid. The signal, as can be seen in particular in Figures 1 and 2, arrives at a separate unit comprising, for example, a computerized comparison and monitoring device indicated generally by B', which in turn sends a command to the actuating means of one of the devices E so that the latter switches from the state in Figure 1 (delivery of liquid) to that in Figure 2 (interruption of the delivery). The two states are shown diagrammatically by the symbols of valve open (Fig. 1) and valve closed (Fig 2).

According to another advantageous characteristic of the invention, the said operating signal, suitably processed and computerized, is such as to operate, shortly before the aforesaid quantity by weight of liquid is reached in the receiving container R, the cyclic or pulsed opening and closing of the delivery nozzle 7 with a suitable frequency so as to obtain delivery of reduced doses of liquid which makes it possible to reach, in a gradual and precise manner, the total quantity desired.

In the case of metering of small quantities of liquid, such pulsed opening and closing of the delivery nozzle occurs for the whole duration of the metering operation.

Finally, it should be noted that such pulsed opening and closing also has an induced effect of cleaning the delivery nozzle.

As already indicated, the invention finds an application in all situations concerning the metering of one or more liquids, especially when of paste-like consistency or of reduced fluidity, ensuring not only precision of metering but also the substantial elimination of the problems and drawbacks of the known systems.

The characteristics and advantages of the method and the device according to the present invention are revealed by the description given above.

## Claims

1. A method for the metering of liquids, particularly of liquids of paste-like consistency, wherein at least one liquid is fed from a corresponding supply station (S) by means of conveying means, preferably a pump, and a supply pipe (5) to a delivery nozzle (7), the latter delivering the liquid into a receiving container (R) arranged on a weighing balance (B), the latter being able to emit a signal corresponding to the weighed amount present, at the measuring time, in the receiving container (R) and send this signal to a computerized comparison and monitoring device (B'), the said supply pipe (5) having its outlet in a recirculating chamber (11) positioned upstream of said delivery nozzle (7), and said recirculating chamber (11) being also connected to the inlet of a recirculating pipe (4) in turn connected with said supply station (S), the delivery of liquid through said delivery nozzle being controlled by a valve (6) actuatable between a delivery position, in which said supply pipe (5) is in communication with said delivery nozzle (7) through said chamber (11) and a closed position, in which said delivery nozzle (7) is closed and the liquid being conveyed to the recirculating chamber (11) by said conveying means is returned to the supply station (S) through said recirculating pipe (4), said valve (6) being operated between said two positions by actuating means (9) controlled by said computerized comparison and monitoring device (B') on the basis of the signal emitted by said weighing balance, **characterized in that** said conveying means are continuously operated throughout the metering operation, whereby said at least one liquid is constantly circulating between said supply station (S), said delivery nozzle (7) and either the receiving container (R) or the recirculating chamber (11) depending on the position of said valve (6), and said valve (6), at least just before the container (R) contains a predetermined quantity by weight of said at least one liquid, is operated by said actuating means (9) with a cyclic opening and closing between said open and closed positions according to a suitable frequency, whereby reduced amounts by weight of said at least one liquid are delivered into said receiving container (R) under the control of said computerized comparison and monitoring device (B') until the final desired amount by weight measured by the weight balance (B) is reached.

2. A method according to claim 1, **characterized in that** when said valve (6) is in said open position said delivery nozzle (7) is totally open and the inlet of said recirculating pipe (4) is at least partially closed.

3. A device for the metering of at least one liquid, particularly a liquid of paste-like consistency, according to the method of claim 1, comprising a supply station (S) from which at least one liquid is fed by means of conveying means, preferably a pump, and a supply pipe (5) to a delivery nozzle (7), the latter delivering the liquid into a receiving container (R) arranged on a weighing balance (B), the latter being able to emit a signal corresponding to the weighed amount present, at the measuring time, in the receiving container (R) and send this signal to a computerized comparison and monitoring device (B'), the said supply pipe (5) having its outlet in a recirculating chamber (11) positioned upstream of said delivery nozzle (7), and said recirculating chamber (11) being also connected to the inlet of a recirculating pipe (4) in turn connected with said supply station (S), the delivery of liquid through said delivery nozzle (7) being controlled by a valve actuatable between a delivery position, in which said supply pipe (5) is in communication with said delivery nozzle (7) through said chamber (11), and a closed position, in which said delivery nozzle (7) is closed and the liquid being conveyed to the recirculating chamber (11) by said conveying means is returned to the supply station (S) through said recirculating pipe (4), **characterized in that** said conveying means during use are continuously operated throughout the metering operation, said valve consists of a rod (6) passing through said chamber (11) and comprising a lower end (8), which in the closed condition of the valve (6) closes the delivery nozzle (7) preventing the liquid from coming out therefrom and from being delivered into said receiving container (R), the liquid being returned to the supply tank through the recirculating duct (4), and in the open condition opens the delivery nozzle (7), so as to allow the delivery of the liquid to the receiving container (R), said rod (6) being actuated between said two positions by actuating means (9, 10, 12) adapted to operate said rod (6) between the closed and open position with a suitable frequency in a cyclic manner.

4. A device according to claim 3, **characterized in that** said delivery nozzle for each liquid to be supplied to the said receiving container is provided in a head comprising three superimposed frame parts (1, 2, 3), the lower part (1) housing all the delivery nozzles (7), the recirculating chambers (11) and the outlets of the supply pipes (5) as well as the inlets of the recirculating pipes (4), whereby the actuating means (9, 10 and 12) of each rod (6) are alternately housed in one of the upper parts (2 or 3).

5. A device according to claim 4, **characterized in that**, in the open position of said valve means, the inlet of said recirculating pipe (4) is at least partially closed by said lower end (8) of the rod (14).

6. A device according to claim 4, **characterized in that** said head is of cylindrical shape, said delivery nozzles (7) and said recirculating chambers (11) being provided in a circular pattern around the center axis of said head, said delivery nozzles (7) being provided in the base surface of said lower part (1) of said head, and the pairs of openings consisting of the inlet of a recirculating pipe (4) and of the outlet of the supply pipe (5) for each liquid being positioned and vertically aligned in the outer surface of said lower part (1) of said head.

7. A device according to claim 4, **characterized in that** said actuating means (9, 10, 12) for the rods (6) consist of pneumatic pistons (9) slidably housed in cylindrical seats (12), in turn fed with compressed air through pipes (10).

8. A device according to claim 7, **characterized in that** said pneumatic pistons (9) are alternately housed in one of the upper parts (2 or 3) of said head.

## Patentansprüche

1. Ein Verfahren zum Messen von Flüssigkeiten, insbesondere von Flüssigkeiten mit pastenartiger Konsistenz, bei dem zumindest eine Flüssigkeit von einer entsprechenden Versorgungsstation (S) durch ein Beförderungsmittel, vorzugsweise eine Pumpe, und eine Versorgungsleitung (5) in eine Abgabedüse (7) eingespeist wird, wobei die letztere die Flüssigkeit in einen Aufnahmebehälter (R) liefert, der auf einer Waage (B) angeordnet ist, wobei letztere ein Signal abgeben kann, das der zum Zeitpunkt der Messung in dem Aufnahmebehälter (R) vorhandenen, gewogenen Menge entspricht, und dieses Signal an eine rechnergestützte Vergleichs- und Überwachungsvorrichtung (B') senden kann, wobei die Versorgungsleitung (5) ihren Auslaß in einer flussaufwärts der Abgabedüse (7) platzierten Umlaufkammer (11) hat, und die Umlaufkammer (11) auch mit dem Einlass einer Umlaufleitung (4) verbunden ist, die ihrerseits mit der Versorgungsstation (S) verbunden ist, wobei die Abgabe von Flüssigkeit durch die Abgabedüse durch ein Ventil (6) gesteuert wird, das einstellbar ist zwischen einer Abgabestellung, in der die Versorgungsleitung (5) mit der Abgabedüse (7) über die Kammer (11) in Verbindung ist, und einer geschlossenen Stellung, in der die Abgabedüse (7) geschlossen ist und die durch das Beförderungsmittel zur Umlaufkammer (11) beförderte Flüssigkeit durch die Umlaufleitung (4) zur Versorgungsstation (S) zurückbefördert wird, wobei das Ventil (6) zwischen den zwei Stellungen durch ein Betätigungsmittel (9) betrieben wird, das durch die rechnergestützte Vergleichs- und überwachungsvorrichtung (B') auf der Grundlage der von der Waage abgegebenen Signale gesteuert wird, **dadurch gekennzeichnet, dass** das Beförderungsmittel während des Messbetriebs durchgehend betrieben wird, wodurch die zumindest eine Flüssigkeit ständig zwischen der Versorgungsstation (S), der Abgabedüse (7) und, je nach Stellung des Ventils (6), entweder dem Aufnahmebehälter (R) oder der Umlaufkammer (11) fließt, und wobei, zumindest kurz bevor der Behälter (R) eine vorher festgelegte Gewichtsmenge der zumindest einen Flüssigkeit enthält, das Ventil (6) durch das Betätigungsmittel (9) mit einem zyklischen Öffnen und Schließen zwischen der offenen und der geschlossenen Stellung entsprechend einer geeigneten Frequenz betrieben wird, wodurch verringerte Gewichtsmengen der zumindest einen Flüssigkeit gesteuert von der rechnergestützten Vergleichs- und Überwachungsvorrichtung (B') in den Aufnahmebehälter geliefert werden bis die letztlich gewünschte, mit der Waage (B) gemessene Gewichtsmenge erreicht ist.

2. Ein Verfahren nach Anspruch 1, **dadurch gekennzeichnet, dass**, wenn das Ventil (6) in der offenen Stellung ist, die Abgabedüse (7) ganz auf und der Einlass der Umlaufleitung (4) zumindest teilweise geschlossen ist.

3. Eine Vorrichtung zum Messen von zumindest einer Flüssigkeit, insbesondere einer Flüssigkeit von pastenartiger Konsistenz, entsprechend dem Verfahren nach Anspruch 1, mit einer Versorgungsstation (S), von der zumindest eine Flüssigkeit durch ein Beförderungsmittel, vorzugsweise eine Pumpe, und eine Versorgungsleitung (5) in eine Abgabedüse (7) eingespeist wird, wobei die letztere die Flüssigkeit in einen angeordneten Aufnahmebehälter (R) abgibt, der auf einer Waage (B) angeordnet ist, wobei letztere ein Signal abgeben kann, das der zum Zeitpunkt der Messung in dem Aufnahmebehälter (R) vorhandenen, gewogenen Menge entspricht, und dieses Signal an eine rechnergestützte Vergleichs- und Überwachungsvorrichtung (B') senden kann, wobei die Versorgungsleitung (5) ihren Auslaß in einer flussaufwärts der Abgabedüse (7) platzierten Umlaufkammer (11) hat, und die Umlaufkammer (11) auch mit dem Einlass einer Umlaufleitung (4) verbunden ist, die ihrerseits mit der Versorgungsstation (S) verbunden ist, wobei die Abgabe von Flüssigkeit durch die Abgabedüse (7) über ein Ventil gesteuert wird, das einstellbar ist zwischen einer Abgabestellung, in der die Versorgungsleitung (5) mit der Abgabedüse (7) über die Kammer (11) in Verbindung ist, und einer geschlossenen Stellung, in der die Abgabedüse (7) geschlossen ist und die durch das Beförderungsmittel zur Umlaufkammer (11) beförderte Flüssigkeit durch die Umlaufleitung (4) zur Versorgungsstation (S) zurückbefördert wird, **dadurch gekennzeichnet, dass** das Beförderungsmittel während des Gebrauchs durchgehend während des Messbetriebs betrieben wird, wobei das Ventil aus einem Stab (6) besteht, der durch die Kammer (11) durchgeht und ein unteres Ende (8) aufweist, welches in dem geschlossenen Zustand des Ventils (6) die Abgabedüse schließt, wobei die Flüssigkeit daran gehindert wird, davon auszutreten und in den Aufnahmebehälter (R) geliefert zu werden, wobei die Flüssigkeit durch die Umlaufleitung (4) zum Versorgungstank zurückbefördert wird, und der in dem offenen Zustand die Abgabedüse (7) öffnet, so dass er die Abgabe der Flüssigkeit in den Aufnahmebehälter (R) erlaubt, wobei der Stab (6) durch ein Betätigungsmittel (9, 10, 12), das daran angepasst ist, den Stab (6) zwischen einer geschlossenen und einer offenen Stellung mit einer geeigneten Frequenz in zyklischer Art zu betreiben, zwischen den zwei Positionen betätigt wird.

4. Eine Vorrichtung nach Anspruch 3, **dadurch gekennzeichnet, dass** die Abgabedüse für jede an den Aufnahmebehälter zu liefernde Flüssigkeit in einem Kopf vorgesehen ist, der drei überlagerte Rahmenteile (1, 2, 3) umfasst, wobei der untere Teil (1) alle Abgabedüsen (7), die Umlaufkammern (11) und die Auslässe der Versorgungsleitungen (5), sowie die Einlässe der Umlaufleitungen (4) enthält, wobei die Betätigungsmittel (9, 10 und 12) aller Stäbe (6) abwechselnd in einem der oberen Teile (2 oder 3) untergebracht sind.

5. Vorrichtung nach Anspruch 4, **dadurch gekennzeichnet, dass** in der offenen Stellung des Ventilmittels der Einlass der Umlaufleitung (4) zumindest teilweise durch das untere Ende (8) des Stabs (14) verschlossen ist.

6. Vorrichtung nach Anspruch 4, **dadurch gekennzeichnet, dass** der Kopf von zylindrischer Form ist, wobei die Abgabedüsen (7) und die Umlaufkammern (11) in einem runden Muster um die Mittelachse des Kopfs vorgesehen sind, wobei die Abgabedüsen (7) in der Grundfläche des unteren Teils (1) des Kopfs vorgesehen sind, und wobei die Paare von Öffnungen, die aus dem Einlass einer Umlaufleitung (4) und dem Auslaß der Versorgungsleitung (5) für jede Flüssigkeit bestehen, in der äußeren Oberfläche des unteren Teils (1) des Kopfs platziert und vertikal ausgerichtet sind.

7. Vorrichtung nach Anspruch 4, **dadurch gekennzeichnet, dass** die Betätigungsvorrichtungen (9, 10, 12) für die Stäbe (6) aus pneumatischen Kolben (9) bestehen, die gleitend in zylindrischen Einpassungen (12) untergebracht sind, die ihrerseits durch Leitungen (10) mit. Druckluft gespeist werden.

8. Vorrichtung nach Anspruch 7, **dadurch gekennzeichnet, dass** die pneumatischen Kolben (9) abwechselnd in einem der oberen Teile (2 oder 3) des Kopfs untergebracht sind.

## Revendications

1. Procédé pour mesurer des liquides, particulièrement des liquides de consistance pâteuse, dans lequel au moins un liquide est introduit à partir d'un poste d'alimentation correspondant (S) au moyen de moyens de transport, de préférence une pompe et un tuyau d'alimentation (5) vers une buse de livraison (7), cette dernière délivrant le liquide à l'intérieur d'un réservoir de réception (R) agencé sur une bascule (B), cette dernière pouvant émettre un signal correspondant à une quantité pesée présente, au niveau du temps de mesure, dans le réservoir de réception (R) et envoyer ce signal vers un dispositif informatisé de comparaison et de contrôle (B'), ledit tuyau d'alimentation (5) présentant son orifice de sortie dans une chambre de circulation (11) positionnée en amont de ladite buse de livraison (7), et ladite chambre de circulation (11) étant également reliée à l'orifice d'entrée d'un tuyau de circulation (4) à son tour relié au dit poste d'alimentation (S), la livraison de liquide à travers ladite buse de livraison étant commandée par un robinet (6) actionné entre une position de livraison, dans laquelle ledit tuyau d'alimentation (5) est en communication avec ladite buse de livraison (7) à travers ladite chambre (11) et une position fermée, dans laquelle ladite buse de livraison (7) est fermée et le liquide étant transporté vers la chambre de circulation (11) par lesdits moyens de transport est renvoyé vers le poste d'alimentation (S) à travers ledit tuyau de circulation (4), ledit robinet (6) étant actionné entre lesdites deux positions par les moyens d'actionnement (9) commandés par ledit dispositif informatisé de comparaison et de contrôle (B') sur la base du signal émis par ladite bascule, **caractérisé en ce que** lesdits moyens de transport sont actionnés de manière continue pendant toute l'opération de mesure, moyennant quoi ledit au moins liquide circule constamment entre ledit poste d'alimentation (S), ladite buse de livraison (7) et soit le récipient de réception (R), soit la chambre de circulation (11) selon la position dudit robinet (6) et ledit robinet (6), au moins juste avant que le réservoir (R) ne comprenne une quantité prédéterminée de poids dudit au moins liquide, est actionné par lesdits moyens d'actionnement (9) avec une ouverture et une fermeture cycliques entre lesdites positions ouvertes et fermées selon une fréquence convenable, des quantités réduites en poids dudit au moins liquide étant délivrées à l'intérieur dudit réservoir de réception (R) sous la commande dudit dispositif informatisé de comparaison et de contrôle (B') jusqu'à ce que la quantité finale souhaitée en poids mesurée par la bascule (B) soit atteinte.

2. Procédé selon la revendication 1, **caractérisé en ce que** quand ledit robinet (6) est dans ladite position ouverte ladite buse de livraison (7) est totalement ouverte et l'orifice d'entrée dudit tuyau de circulation (4) est au moins partiellement fermé.

3. Dispositif destiné à mesurer au moins un liquide, particulièrement un liquide de consistance pâteuse, selon le procédé de la revendication 1, comprenant un poste d'alimentation (S) à partir duquel au moins un liquide est introduit au moyen de moyens de transport, de préférence une pompe et un tuyau d'alimentation (5) vers une buse de livraison (7), cette dernière délivrant le liquide à l'intérieur d'un réservoir de réception (R) agencé sur une bascule (B), cette dernière pouvant émettre un signal correspondant à une quantité pesée présente, au niveau du temps de mesure, dans le réservoir de réception (R) et envoyer ce signal vers un dispositif informatisé de comparaison et de contrôle (B'), ledit tuyau d'alimentation (5) présentant son orifice de sortie dans une chambre de circulation (11) positionnée en amont de ladite bue de livraison (7), et ladite chambre de circulation (11) étant également reliée à l'orifice d'entrée d'un tuyau de circulation (4) à son tour relié au dit poste d'alimentation (S), la livraison de liquide à travers ladite buse de livraison étant commandée par un robinet (6) actionné entre une position de livraison, dans laquelle ledit tuyau d'alimentation (5) est en communication avec ladite buse de livraison (7) à travers ladite chambre (11) et une position fermée, dans laquelle ladite buse de livraison (7) est fermée et le liquide étant transporté vers la chambre de circulation (11) par lesdits moyens de transport est renvoyé vers le poste d'alimentation (S) à travers ledit tuyau de circulation (4), **caractérisé en ce que** lesdits moyens de transport pendant l'utilisation sont actionnés de manière continue pendant toute l'opération de mesure, ledit robinet consistant en une tige (6) passant à travers ladite chambre (11) et comprenant une extrémité inférieure (8) qui dans l'état fermé du robinet (6) ferme la buse de livraison (7) empêchant le liquide d'être renvoyé vers le réservoir d'alimentation à travers la conduite de circulation (4), et dans l'état ouvert ouvre la buse de livraison (7) de manière à permettre la livraison du liquide vers le récipient de réception (R), ladite tige (6) étant actionnée entre lesdites deux positions par les moyens d'actionnement (9, 10, 12) adaptés pour actionner ladite tige (6) entre la position fermée et ouverte avec une fréquence convenable d'une manière cyclique.

4. Dispositif selon la revendication 3, **caractérisé en ce que** ladite buse de livraison pour chaque liquide devant être introduit vers ledit réservoir de réception est proposée dans une tête comprenant trois parties superposées formant châssis (1, 2, 3), la partie inférieure (1) logeant toutes les buses de livraison (7), les chambres de circulation (11) et les orifices de sortie des tuyaux d'alimentation (5) de même que les orifices d'entrée des tuyaux de circulation (4), les moyens d'actionnement (9, 10 et 12) de chaque tige (6) étant alternativement logés dans une des parties supérieures (2 ou 3).

5. Dispositif selon la revendication 4, **caractérisé en ce que**, dans la position ouverte desdits moyens formant robinet, l'orifice d'entrée dudit tuyau de circulation (4) est au moins partiellement fermé par ladite extrémité inférieure (8) de la tige (14).

6. Dispositif selon la revendication 4, **caractérisé en ce que** ladite tête est de forme cylindrique, lesdites buses de livraison (7) et lesdites chambres de circulation (11) étant proposées dans une configuration circulaire autour de l'axe central de ladite tête, lesdites buses de livraison (7) étant proposées dans la surface de base de ladite partie inférieure (1) de ladite tête, et les paires d'ouvertures consistant en l'orifice d'entrée d'un tuyau de circulation (4) et l'orifice de sortie du tuyau d'alimentation (5) pour chaque liquide étant positionné et aligné verticalement dans la surface extérieure de ladite partie inférieure (1) de ladite tête.

7. Dispositif selon la revendication 4, **caractérisé en ce que** lesdits moyens d'actionnement (9, 10, 12) pour les tiges (6) consistent en pistons pneumatiques (9) logés de manière coulissante dans des sièges cylindriques (12) à leur tour alimentés en air comprimé à travers les tuyaux (10).

8. Dispositif selon la revendication 7, **caractérisé en ce que** lesdits pistons pneumatiques (9) sont alternativement logés dans une des parties supérieures (2 ou 3) de ladite tête.
